# EUROPEAN PATENT SPECIFICATION

(11) **EP 2 734 052 B1**
(45) Date of publication and mention of the grant of the patent: **06.05.2015**
(21) Application number: 12734924.9
(22) Date of filing: 09.07.2012
(51) Int. Cl.: A23G 1/20, A23G 9/26, A23G 9/28

(54) **CUTTING OR EMBOSSING TOOL FOR FROZEN CONFECTIONERY PRODUCTS**
SCHNEID- ODER PRÄGEWERKZEUG FÜR GEFRORENE SÜSSWAREN
OUTIL DE COUPE OU DE TRAVAIL EN RELIEF POUR CONFISERIES SURGELÉES

(30) Priority: 22.07.2011 WO PCT/CN2011/077465
(43) Date of publication of application: 28.05.2014
(73) Proprietor: Nestec S.A., 1800 Vevey (CH)
(72) Inventor: AMEND, Thomas Aloisius Valentinus, Mountain View, California 94040 (US); SRIDAMA, Visit, Saimai Bangkok 10220 (TH); MA, Changpu, Shanghai 200442 (CN)
(74) Representative: Elleby, Gudrun
(86) International application number: PCT/EP2012/063367
(87) International publication number: WO 2012/156538

(56) References cited:
- EP-A1- 1 767 099
- US-A- 1 429 405
- US-A- 2 112 173
- ANONYMOUS: "Nestlé's first peelable ice cream rolls out worldwide", INTERNET CITATION, 16 February 2011 (2011-02-16), pages 1-2, XP002668463, Retrieved from the Internet: URL:http://www.nestle.com/Media/NewsAndFea tures/Pages/Nestles-first-peelable-ice-cre am-roll-out-worldwide.aspx [retrieved on 2012-01-31]

## Description

### Field of the invention

The present invention relates to a cutting or embossing tool for frozen confectionery products comprising at least two elements, each element comprising a void with an inner contour corresponding to the outer contour of the product to be cut or embossed. At least one of the elements comprises at least one knife or embosser with a blade or an embossing surface extending along the inner contour of the void. This tool can be used to cut one or more cutting lines or a pattern of cutting lines into the surface of a frozen confectionery product, in particular for products having a peelable gel coating. It can also be used to decorate the surface of a frozen confectionery product with an embossed pattern or image.

### Background of the invention

Frozen confectionery products consisting entirely of a frozen gel or comprising a frozen gel are already known and are popular in particular with children.

One example for a frozen confectionery product comprising a core consisting of a frozen confection, said core being at least partially coated with a frozen flexible edible gel layer, is the frozen dessert stick "Eskimo Monkey" which is sold by Nestle Thailand. This product comprises an ice-cream core being coated with a frozen flexible edible gel layer. This gel layer can be peeled of by the consumer and eaten separately. Since the gel is resistant to liquefaction, even in the defrosted state, the product parts that have been peeled down by the consumer remain intact without melting and dripping. To facilitate the peeling, four longitudinal cutting lines are provided in the gel layer, so that four flaps of peel can be peeled off. One thereby achieves a banana-style peeling effect.

As it becomes clear from the above, an important feature of the gel used to form the peelable gel layer is that it resists to meltdown even after complete defrosting. This is achieved by the addition of stabilisers such as locust bean gum, kappa-carrageenan, sodium alginate or pectin to the mix. EP 1339290 A2 describes such a jelly or gel and its use in a composite frozen confectionery product.

So far there exist only products allowing a very simple peeling effect, i.e. using longitudinal cutting lines so that flaps can be peeled down. Any attempts to provide different product concepts still involving a similar "play effect" have failed.

### Object of the invention

It is thus the object of the present invention to provide a tool allowing it to make a novel and appealing frozen confectionery product giving a different experience to Consumers.

### Summary of the invention

This object is achieved by the cutting or embossing tool according to claim 1.

According to the invention, the cutting or embossing tool for frozen confectionery products comprises at least two elements, for example two halves, each element comprising a void with an inner contour corresponding to the outer contour of the product to be cut or embossed. At least one of the elements comprises at least one knife or embosser with a blade or an embossing surface extending along the inner contour of the void.

The use of this cutting tool makes it extremely simple to cut virtually any desired pattern of cutting lines into the surface of a frozen confectionery product, e.g. into an outer gel layer or another type of coating.

During the cutting or embossing process, the product is kept in a fixed position, e.g. held by its stick if it comprises one. The elements of the cutting tool are then closed around the product, with the inner contour of their voids, once the tool is closed, corresponding to the outer contour of the product. The knives extending along the inner contour of the void will then be pushed into the outer layer product, e.g. into a gel layer or another coating, and thereby cut the desired cutting line. If embossers rather than knives are used, these will be pushed into the outer layer of the product to print a pattern or an image on the outer surface. Afterwards the cutting tool is opened, i.e. the elements are moved apart and away from the product, and the product which is now provided with the desired cutting line or embossed decoration can be further processed or packaged.

The term "embosser" has to be understood in the present context as any protrusion which can press or print a desired image or pattern into an outer layer of a frozen confectionery product without actually cutting through the outer layer.

Neither the product nor the cutting knife or knives have to be rotated, so that no driving mechanism and associated control are needed, and no torsion force is exerted on the stick or the mechanism holding the product in the case of a product without a stick.

Appropriate cutting tools can be designed for virtually any product shape, one is in particular not limited to cylindrical or symmetrical products.

While a cutting tool consisting of two elements, such as two halves, may be the preferred solution for products having a simple shape and for relatively simple cutting patterns, more complex product shapes may require the use of three or more elements that are closed around the product during the cutting process.

According to a preferred embodiment of the invention, each element of the tool comprises a set of knives extending in parallel along the inner contour of the void, and these sets of knives form together a cutting line extending spirally over a surface of the frozen confectionery product. Such a spiral cutting line, when cut into an outer layer consisting of a frozen peelable gel, allows it to obtain an interesting product with an outer gel layer that can be peeled off in a spiral.

Preferably, the cutting line has an inclination of between 3° and 60°, preferably between 5° and 25°, with respect to a plane extending perpendicularly to the symmetry axis of the spiral. In the case where the product comprises a stick, this axis corresponds to the axis of the inserted stick.

Such a spiral cutting line can either be straight to form a simple spiral or ondulated. There may be several such cutting lines, e.g. two cutting lines extending spirally forming a double helix.

With regard to the inclination of the cutting line extending spirally over the gel layer, a tool consisting of two halves is usually preferred for smaller angles such as up to 20°, whereas for angles above 20°, it may be preferable to use a tool consisting of three or more elements to achieve the desired cutting line.

According to another preferred embodiment of the invention, at least one element of the tool comprises at least one knife or set of knives defining a cutting line forming a window-like cut-out. Such a cut-out can have virtually any shape, e.g. rectangular, circular, oval, heart-shaped or star-shaped. If the outer layer of the product consists of a peelable gel coating, then the consumer can peel off the coating covering the cut-out delimited by the cutting line, so that pieces of the gel coating can be peeled off. Instead of peeling off a cut-out, one can also peel-off the coating surrounding a cut-out shape, so that only one or several sticker-like pieces of coating having a specific shape remain. The peeling-off can either be done by the consumer, or already in the factory, so that products with shapes made of a peelable gel coating on an ice cream core can be sold.

According to another preferred embodiment of the invention, each element of the tool comprises two sets of parallel knives with a first set of knives extending substantially perpendicularly to a second set of knives, so that a grid of cutting lines extending over the surface of the product is formed. Such a knife arrangement provides an interesting and attractive look to the product, and consumers can play with the coating which is cut into segments in various ways.

According to a preferred embodiment of the invention, the cutting tool furthermore comprises an insert holding the product during cutting and during removal of the sets of knives. This avoids that parts of the gel layer stick to the knives when the cutting tool is opened.

It should be noted that when the tool is used to cut cutting lines or a pattern of cutting lines into a peelable gel coating, the blades of the knives should be sufficiently deep, and the void of the elements of the tool should be fitting the product in such a way, that the cutting line extends fully through the gel layer up to the core. Typically the depth of cutting corresponds to the thickness of the skin layer or is slightly bigger.

### Figures

The present invention is further described hereinbelow referring to the accompanying drawings which illustrate one preferred embodiment of the invention and an example of a product made using same.
**Figure 1** shows an example of a frozen confectionery product made using a tool according to the invention.
**Figure 2** shows the product of fig. 1 with a gel layer being partially peeled off
**Figure 3** shows an example of a cutting tool according to the invention
**Figure 4** shows the cutting tool of fig. 3 in use.

### Example

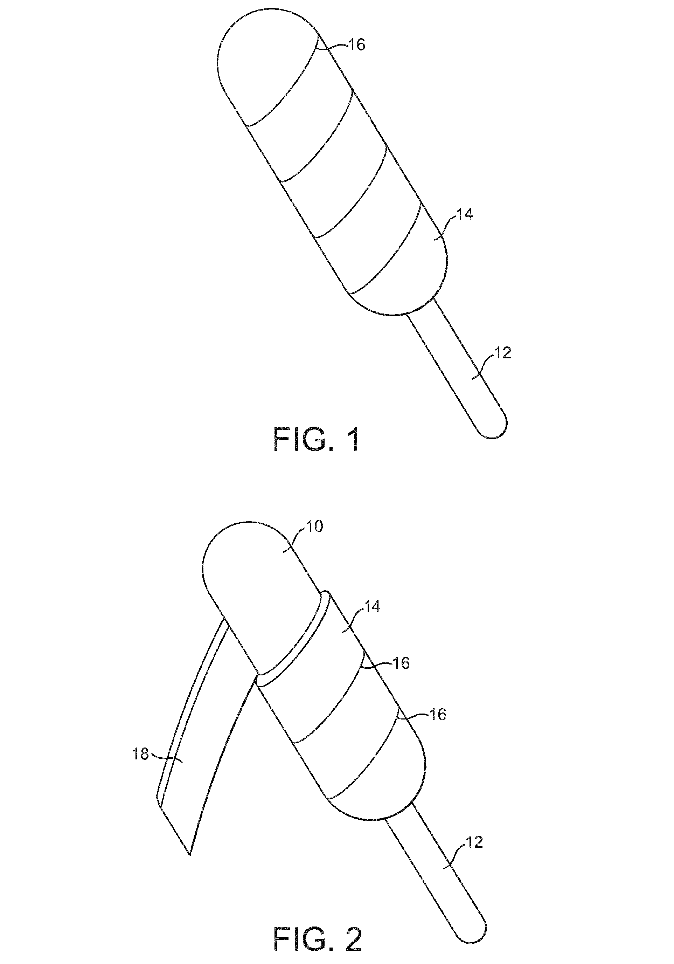

Figs. 1 and 2 show a frozen confectionery product which comprises a cylindrical ice-cream core 10 (cf. Fig. 2) which is completely coated with a frozen flexible edible gel layer 14. A cutting line 16 extends spirally over the gel layer 14 and allows to peel-off the gel-layer 14 in a continuous spiral 18 (cf. fig. 2).

The product is produced as follows:
For the gel layer, a mix is prepared according to the following recipe:

| | |
|---|---|
| Corn syrup solids | 10% |
| Sucrose | 25% |
| Citric acid | 0.5% |
| Carrageenan | 0.4% |
| Locust bean gum | 0.3% |
| Colors, flavors | 1% |
| Remainder is water | |

The mix is pasteurized at 85° C for 30 seconds and filled into moulds at a mix temperature of 50 C.

As already mentioned above, it is also possible to use a recipe containing in addition to a polyanionic gelling hydrocolloid, or any other gelling agent, a gelation controller or inhibitor. In particular one of the recipes described in EP 1339290 B1 or US 6548097 B1 can be used. In this case the mix can be cooled down after its preparation and stored in the cooled down state. Due to the added gelation controller or inhibitor it can be kept in this state for a relatively long period of time without any degradation. Before use, the mix is reheated, additives that will trigger the gelation are added, and the mix is then processed in the same way as the mix without gelation controller or inhibitor.

The moulds containing the gel mix are cooled in a cold brine bath until a frozen layer with a thickness of around 3 to 5 mm is formed. The remaining mix, which is still liquid, is then sucked back out of the mould. One thereby obtains a shell of edible, flexible frozen gel in the mould.

The shell is then filled with a standard vanilla ice cream mix. A wooden stick is inserted into the product and the product is frozen completely.

Once frozen, the product is demoulded. For the demoulding, the mould is warmed up through a warm liquid that is sprayed on the outside of the mould. This allows the surface layer of the product to warm up slightly and to soften, so that demoulding is facilitated. The softening also helps to perform the subsequent process step of cutting.

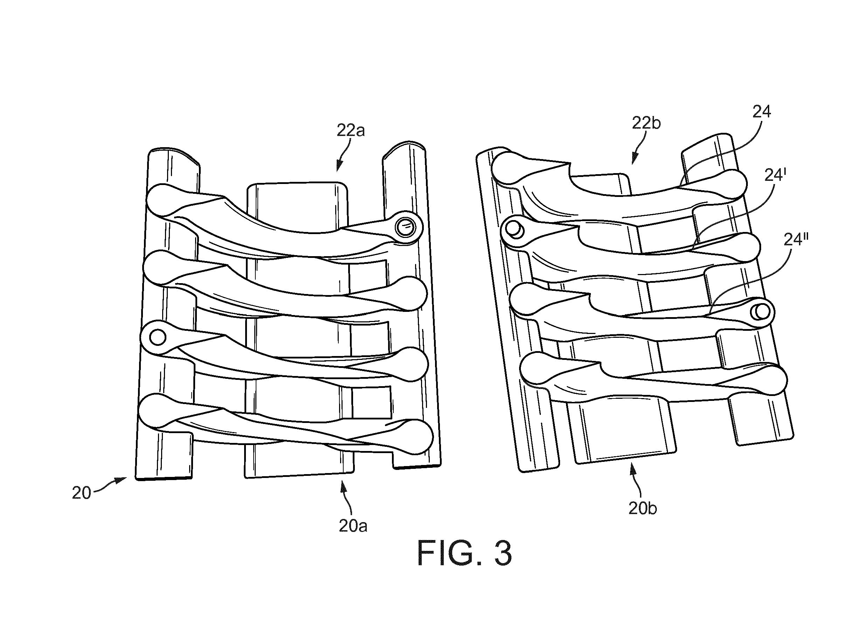

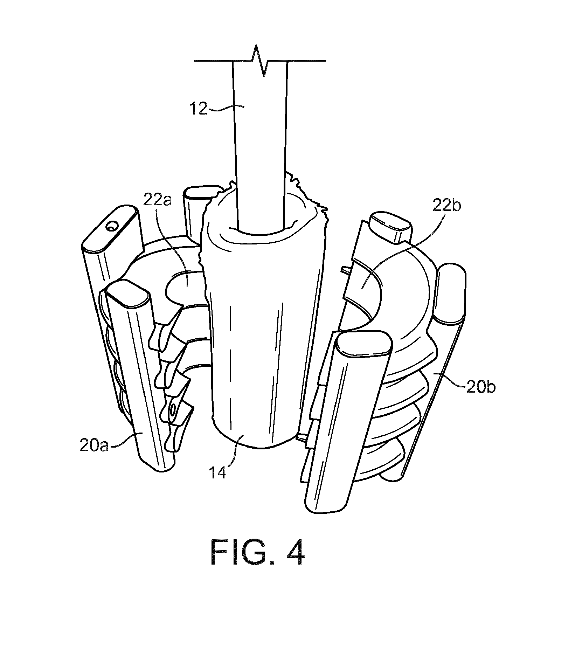

In the following step, the cutting lines are cut into the gel layer 14 using a cutting tool shown which is shown in Figs. 3 and 4. The cutting tool 20 consists of two halves 20a, 20b, each of the halves having a void 22a, 22b which has the form of a half-cylinder. The voids are limited in each of the two halves 20a, 20b by a set of knives 24, 24', 24". In the present case, four substantially parallel knives 24, 24', 24" are arranged substantially in parallel along the void.

To cut the spiral into the gel layer, the two halves 20a, 20b of the cutting tool 20 are placed on either side of the product (cf. fig. 4) and then pushed towards the product until the knives 24, 24', 24" from both halves touch each other. Together, the knives 24, 24', 24" from both halves form a spiral that is pressed into the gel layer at the surface of the product. The dimensions of the tool 20 and the knives 24, 24', 24" are chosen in such a manner that the gel layer is completely cut through, i.e. the cutting lines 16 will have a depth of at least 3mm.

The cutting tool 20 is then opened, i.e. the two halves 20a, 20b are taken apart.

As it is illustrated in fig. 2, when the product is allowed to warm up slightly, the gel layer 14 at the surface can be peeled off from the product core in a spiral.

### Reference Numerals

- 10: Core
- 12: Stick
- 14: Gel Layer
- 16: Cutting line
- 20: Cutting tool
- 20a, 20b: Element of cutting tool
- 22a, 22b: Void
- 24', 24", 24": Knife

## Claims

1. Cutting or embossing tool (20) for frozen confectionery products comprising at least two elements (20a, 20b), each element comprising a void (22a, 22b) with an inner contour corresponding to the outer contour of the product to be cut or embossed, and at least one of the elements (20a, 20b) comprising at least one knife (24, 24', 24") or embosser with a blade or an embossing surface extending along the inner contour of the void (22a, 22b).

2. Cutting or embossing tool (20) according to claim 1, wherein each element (20a, 20b) comprises a set of knives (24, 24', 24") extending in parallel along the inner contour of the void (22a, 22b), and wherein the sets of knives (24, 24', 24") of the at least two elements (20a, 20b) form together a cutting line (16) extending spirally over a surface of the frozen confectionery product.

3. Cutting or embossing tool (20) according to claim 1, wherein at least one element (20a, 20b) comprises at least one knife defining a cutting line forming a window-like cut-out.

4. Cutting or embossing tool (20) according to claim 1, wherein each element (20a, 20b) comprises two sets of parallel knives with a first set of knives extending substantially perpendicularly to a second set of knives, so that a grid of cutting lines extending over the surface of the product is formed.

5. Cutting or embossing tool (20) according to claim 1, wherein at least one element comprises embossers with an embossing surface forming a decorative shape.

6. Cutting or embossing tool according to any of the preceding claims, comprising an insert holding the product during cutting and during removal of the knife.

7. Cutting or embossing tool (20) according to any of the preceding claims, wherein the at least two elements consist of two halves (20a, 20b).

## Patentansprüche

1. Schneid- oder Prägewerkzeug (20) für gefrorene Süßwarenprodukte mit mindestens zwei Elementen (20a, 20b), wobei jedes Element einen Hohlraum (22a, 22b) mit einer Innenkontur entsprechend der Außenkontur des zu schneidenden oder prägenden Produktes umfasst und mindestens eines der Elemente (20a, 20b) mindestens ein Messer (24, 24', 24") oder Prägeteil mit einer Klinge oder einer Prägefläche, die sich entlang der Innenkontur des Hohlraumes (22a, 22b) erstreckt, umfasst.

2. Schneid- oder Prägewerkzeug (20) gemäß Anspruch 1, wobei jedes Element (20a, 20b) einen Messersatz (24, 24', 24") umfasst, der sich parallel entlang der Innenkontur des Hohlraumes (22a, 22b) erstreckt, und wobei die Messersätze (24, 24', 24") der mindestens zwei Elemente (20a, 20b) zusammen eine Schnittlinie (16) bilden, die sich spiralförmig über eine Oberfläche des gefrorenen Süßwarenproduktes erstreckt.

3. Schneid- oder Prägewerkzeug (20) gemäß Anspruch 1, wobei mindestens ein Element (20a, 20b) mindestens ein Messer umfasst, das eine Schnittlinie definiert, welche einen fensterartigen Ausschnitt bildet.

4. Schneid- oder Prägewerkzeug (20) gemäß Anspruch 1, wobei jedes Element (20a, 20b) zwei Sätze von parallelen Messern umfasst, wobei ein erster Messersatz im Wesentlichen senkrecht zu einem zweiten Messersatz derart verläuft, dass ein Gitter von sich über die Oberfläche des Produktes erstreckenden Schnittlinien ausgebildet wird.

5. Schneid- oder Prägewerkzeug (20) gemäß Anspruch 1, wobei mindestens ein Element Prägeteile mit einer Prägeoberfläche umfasst, die eine dekorative Form ausbildet.

6. Schneid- oder Prägewerkzeug gemäß einem der vorhergehenden Ansprüche, mit einem Einsatz, welcher das Produkt während des Schneidens und während der Entnahme des Messers festhält.

7. Schneid- oder Prägewerkzeug (20) gemäß einem der vorhergehenden Ansprüche, wobei die mindestens zwei Elemente aus zwei Hälften (20a, 20b) bestehen.

## Revendications

1. Outil de coupe ou d'estampage (20) pour produits de confiserie congelés comprenant au moins deux éléments (20a, 20b), chaque élément comprenant un vide (22a, 22b) avec un contour intérieur correspondant au contour extérieur du produit destiné à être coupé ou estampé, et au moins un des éléments (20a, 20b) comprenant au moins un couteau (24, 24', 24") ou dispositif d'estampage avec une lame ou une surface d'estampage s'étendant le long du contour intérieur du vide (22a, 22b).

2. Outil de coupe ou d'estampage (20) selon la revendication 1, dans lequel chaque élément (20a, 20b) comprend un ensemble de couteaux (24, 24', 24") s'étendant en parallèle le long du contour intérieur du vide (22a, 22b), et dans lequel les ensembles de lames (24, 24', 24") desdits au moins deux éléments (20a, 20b) forment ensemble une ligne de coupe (16) s'étendant en spirale sur une surface du produit de confiserie congelé.

3. Outil de coupe ou d'estampage (20) selon la revendication 1, dans lequel au moins un élément (20a, 20b) comprend au moins une lame définissant une ligne de coupe formant une découpe en fenêtre.

4. Outil de coupe ou d'estampage (20) selon la revendication 1, dans lequel chaque élément (20a, 20b) comprend deux ensembles de couteaux parallèles avec un premier ensemble de couteaux s'étendant sensiblement perpendiculairement à un deuxième ensemble de couteaux, de sorte qu'une grille de lignes de coupe s'étendant sur la surface du produit est formée.

5. Outil de coupe ou d'estampage (20) selon la revendication 1, dans lequel au moins un élément comprend des dispositifs d'estampage avec une surface d'estampage formant une forme décorative.

6. Outil de coupe ou d'estampage selon l'une quelconque des revendications précédentes, comprenant un insert maintenant le produit au cours de la coupe et au cours du retrait du couteau.

7. Outil de coupe ou d'estampage (20) selon l'une quelconque des revendications précédentes, dans lequel lesdits au moins deux éléments consistent en deux moitiés (20a, 20b).
